# EUROPEAN PATENT APPLICATION

(11) **EP 4 759 883 A1**
(43) Date of publication of application: **17.06.2026**
(21) Application number: 24851527.2
(22) Date of filing: 12.07.2024
(51) Int. Cl.: C08L 83/07, C08K 3/013, C08L 63/00

(54) **LIQUID SILICONE RUBBER COMPOSITION**

(30) Priority: 07.08.2023 JP 2023128600
(71) Applicant: SHIN-ETSU CHEMICAL CO., LTD., Tokyo 100-0005 (JP)
(72) Inventor: MINAMIKAWA Tomoya, Annaka-shi, Gunma 379-0224 (JP); HIRABAYASHI Satao, Annaka-shi, Gunma 379-0224 (JP); TSUCHIDA Kazuhiro, Annaka-shi, Gunma 379-0224 (JP); KIMURA Tsuneo, Annaka-shi, Gunma 379-0224 (JP)
(74) Representative: Ter Meer Steinmeister & Partner
(86) International application number: PCT/JP2024/025278
(87) International publication number: WO 2025/033098

(57) **Abstract**

Provided is a liquid silicone rubber composition containing
(A) a liquid organopolysiloxane having two or more alkenyl groups that bond with silicon atoms per molecule,
(B) a filler having an average particle size of 0.1-300 µm,
(C) a 3-glycidyloxypropylsilanol oligomer represented by formula (1) 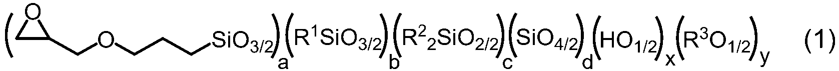 (in the formula, R¹ is a monovalent hydrocarbon group, R² is a monovalent hydrocarbon group optionally substituted by a glycidyloxy group, R³ is a monovalent aliphatic hydrocarbon group, a, b, c, and d are numbers that satisfy a ≥ 0.5, b ≥ 0, c ≥ 0, d ≥ 0, a+b+c+d = 1, x and y are numbers that satisfy x ≥ 1.0, y ≤ 0.5.), and
(D) a curing agent.

## Description

### TECHNICAL FIELD

The present invention relates to a liquid silicone rubber composition.

### BACKGROUND ART

Various means can be used as methods for imparting thixotropy to liquid silicone rubber compositions. Patent Document 1 discloses a method that adds a surface-treated silica fine powder.

However, in this method, the surface-modified silica fine powder ends up acting as a reinforcing silica for silicone rubber, and so the rise in hardness and the rebound resilience and compression set of the silicone rubber generally worsen.

Patent Document 2 discloses a method that adds, for example, a silane coupling agent containing an alkoxysilyl, epoxy, acid anhydride, peroxysilyl or other group.

However, in this method, the silane coupling agent may evaporate during storage, lowering the amount of active ingredient, or may be hydrolyzed by moisture, forming an alcohol or the like. Hence, foaming or pinhole formation may arise during heat-curing of the silicone composition, and so a drying step or the like prior to use is sometimes necessary.

Patent Document 3 discloses a method that adds an organosilane or organopolysiloxane having one or two silanol groups per molecule in order to control the thixotropy (shelf stability) of a liquid silicon rubber composition.

However, it is possible for silanol group-containing organosilanes and organopolysiloxanes too, depending on their molecular weights, to form volatile organic compounds (VOCs) in the same way as silane coupling agents. Moreover, because such silanol groups may lead to worsening of the elasticity and to decreased hardness of the crosslinked silicone rubber moldings, it has been difficult to achieve both good thixotropy and good rubber properties.

Hence, there are no examples in the literature of low-VOC, thixotropy-imparting art that freely controls the thixotropy without adversely affecting the physical properties of cured silicone rubbers. Moreover, given the trend in recent years toward the mitigation of environmental impacts, there exists a desire for low-VOC materials and thus a desire for materials which rely less on volatile additives and have reduced solvent emissions.

### PRIOR ART DOCUMENTS

### PATENT DOCUMENTS

Patent Document 1: JP-A H09-316339
Patent Document 2: JP-A H06-306290
Patent Document 3: JP-A 2016-145301

### SUMMARY OF INVENTION

### TECHNICAL PROBLEM

The present invention was arrived at in light of the above circumstances. The object of the invention is to provide a liquid silicone rubber composition which has excellent shelf stability and imparts thixotropy without increasing the content of VOCs and without worsening the hardness and compression set of the cured composition.

### SOLUTION TO PROBLEM

The inventors have conducted intensive investigations aimed at achieving the above object. As a result, they have discovered that by adding a specific 3-glycidyloxypropylsilanol oligomer to a liquid silicone rubber composition, there can be obtained a liquid silicone rubber composition which does not change over time and has excellent shelf stability, in which the VOC content does not increase, and which composition is moreover able to impart thixotropy without worsening the hardness and compression set of the cured composition.

Accordingly, this invention provides the following liquid silicone rubber composition.
1. A liquid silicone rubber composition which includes:
   (A) a liquid organopolysiloxane having two or more silicon-bonded alkenyl groups per molecule,
   (B) a filler having an average particle size of 0.1 to 300 µm,
   (C) a 3-glycidyloxypropylsilanol oligomer of formula (1) below 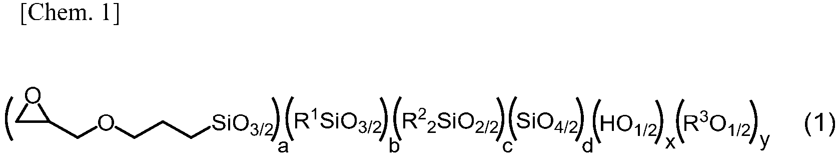 (wherein R¹ is a monovalent hydrocarbon group of 1 to 10 carbon atoms, each R² is independently a monovalent hydrocarbon group of 1 to 10 carbon atoms which may be substituted with a glycidyloxy group, R³ is a monovalent aliphatic hydrocarbon group of 1 to 10 carbon atoms, a, b, c and d are numbers which satisfy the conditions a ≥ 0.5, b ≥ 0, c ≥ 0, d ≥ 0 and a+b+c+d = 1, and x and y are numbers which satisfy the conditions x ≥ 1.0 and y ≤ 0.5), and
   (D) an effective curing amount of a curing agent.
2. The liquid silicone rubber composition of 1 above, wherein the filler serving as component (B) is an inorganic filler.
3. The liquid silicone rubber composition of 1 or 2 above, wherein component (C) has a weight-average molecular weight of from 500 to 10,000.
4. The liquid silicone rubber composition of any of 1 to 3 above, wherein b, c and d in formula (1) are numbers which satisfy the conditions b = 0, 0 ≤ c ≤ 0.5 and 0 ≤ d ≤ 0.2.

### ADVANTAGEOUS EFFECTS OF INVENTION

The 3-glycidyloxypropylsilanol oligomer-containing liquid silicone rubber composition of the invention is able to exhibit thixotropy without a worsening of the hardness and compression set after curing. Moreover, the liquid silicone rubber composition of the invention does not increase the content of VOCs, has an excellent handleability, and can provide a cured liquid silicone rubber composition in which separation of the filler and the silicone oil does not readily occur.

### BRIEF DESCRIPTION OF DRAWINGS

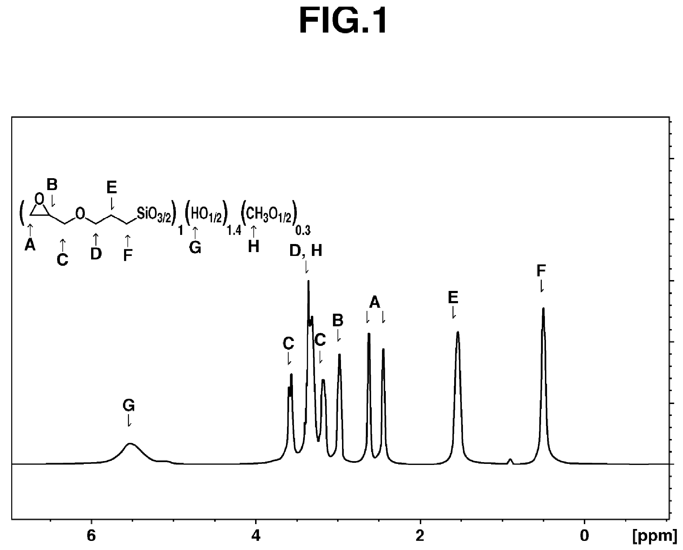

[FIG. 1] FIG. 1 is a ¹H-NMR spectrum of the 3-glycidyloxypropylsilanol oligomer (C) synthesized in Synthesis Example 1 and used in this invention.

### DESCRIPTION OF EMBODIMENTS

The invention is described in detail below, but is not limited to these embodiments.

### (1) Liquid Silicone Rubber Composition

The liquid silicone rubber composition of the invention includes components (A) to (D) below:
(A) a liquid organopolysiloxane having two or more silicon-bonded alkenyl groups per molecule,
(B) a filler having an average particle size of 0.1 to 300 µm,
(C) a 3-glycidyloxypropylsilanol oligomer of formula (1) below 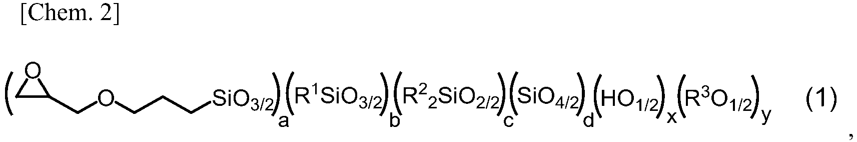 and
(D) a curing agent.

### [Component (A)]

Component (A) is a liquid (in particular, liquid at 25°C) organopolysiloxane having two or more silicon-bonded alkenyl groups per molecule.

Component (A) has a molecular structure which may be, for example, linear, cyclic, branched or three-dimensionally network-like (resin-like), although a linear diorganopolysiloxane in which the backbone is basically composed of repeating diorganosiloxane units and both ends of the molecular chain are capped with triorganosiloxy groups is preferred. In cases where the organopolysiloxane serving as component (A) has a linear or branched molecular structure, the positions within the organopolysiloxane molecule of the silicon atoms at which the alkenyl groups are bonded may be either molecular chain ends (i.e., triorganosiloxy groups) or partway along the molecular chain (i.e., bifunctional diorganosiloxane units or trifunctional monoorganosilsesquioxane units positioned at non-terminal sites on the molecular chain), or may be both. Component (A) is more preferably a linear diorganopolysiloxane having silicon-bonded alkenyl groups at both ends of the molecular chain.

The silicon-bonded alkenyl groups in component (A) are typically exemplified by those having from 2 to 8 carbon atoms, and preferably those having from 2 to 6 carbon atoms. Specific examples include vinyl, allyl, butenyl, pentenyl, hexenyl, cyclohexenyl and heptenyl groups. Of these, vinyl groups are preferred.

The content of silicon-bonded alkenyl groups in component (A) is preferably from 0.001 to 2 moles/100 g, more preferably from 0.001 to 0.5 mol/100 g, and even more preferably from 0.001 to 0.1 mol/100 g, of all silicon-bonded substituents.

Silicon-bonded substituents other than alkenyl groups in component (A) are preferably monovalent hydrocarbon groups. Exemplary monovalent hydrocarbon groups include, without particular limitation, monovalent hydrocarbon groups of 1 to 12 carbon atoms, preferably 1 to 10 carbon atoms. The monovalent hydrocarbon groups may be linear, branched or cyclic, and are exemplified by alkyl groups such as methyl, ethyl, propyl, butyl, pentyl, hexyl, cyclohexyl and heptyl groups; aryl groups such as phenyl, tolyl, xylyl and naphthyl groups; and aralkyl groups such as benzyl and phenethyl groups. Of these, methyl groups are especially preferred.

Component (A) has a viscosity at 25°C which is preferably from 50 to 500,000 mPa·s, more preferably from 100 to 200,000 mPa·s, and even more preferably from 100 to 100,000 mPa·s. At a viscosity within this range, the resulting silicone rubber composition has a good handleability and workability, and the cured form of the resulting silicone-rubber composition has good mechanical properties. In this specification, "viscosity" refers to a value measured with a rotational viscometer by the method set forth in JIS K 7117-1: 1999.

Specific examples of the organopolysiloxane serving as component (A) include dimethylsiloxane-methylvinylsiloxane copolymers capped at both ends of the molecular chain with trimethylsiloxy groups, methylvinylpolysiloxanes capped at both ends of the molecular chain with trimethylsiloxy groups, dimethylsiloxane-methylvinylsiloxane-methylphenylsiloxane copolymers capped at both ends of the molecular chain with trimethylsiloxy groups, dimethylpolysiloxanes capped at both ends of the molecular chain with dimethylvinylsiloxy groups, methylvinylpolysiloxanes capped at both ends of the molecular chain with dimethylvinylsiloxy groups, dimethylsiloxane-methylvinylsiloxane copolymers capped at both ends of the molecular chain with dimethylvinylsiloxy groups, dimethylsiloxane-methylvinylsiloxane-methylphenylsiloxane copolymers capped at both ends of the molecular chain with dimethylvinylsiloxy groups, dimethylpolysiloxanes capped at both ends of the molecular chain with divinylmethylsiloxy groups, dimethylsiloxane-methylvinylsiloxane copolymers capped at both ends of the molecular chain with divinylmethylsiloxy groups, dimethylpolysiloxanes capped at both ends of the molecular chain with trivinylsiloxy groups, dimethylsiloxane-methylvinylsiloxane copolymers capped at both ends of the molecular chain with trivinylsiloxy groups and mixtures of two or more of these organopolysiloxanes.

The organopolysiloxane serving as component (A) may be a single compound used alone or two or more may be used together. Of these, dimethylsiloxane-methylvinylsiloxane copolymers capped at both ends of the molecular chain with trimethylsiloxy groups are preferred. Two or more of the above compounds may be used together in order to facilitate adjustment of the inventive composition within a preferred viscosity range,.

### [Component (B)]

Component (B) is a filler for enhancing the thermal conductivity and strength of the silicone rubber composition of the invention, and for imparting functions such as color adjustment. The average primary particle size is from 0.1 to 300 µm, preferably from 0.5 to 300 µm, more preferably from 0.5 to 200 µm, even more preferably from 0.5 to 100 µm, and yet more preferably from 1 to 10 µm. With particles having an average primary particle size of 0.1 µm or more, production is easy, dispersibility in the silicone polymer (e.g., the alkenyl group-containing organopolysiloxane of component (A) that serves as the base polymer) is good and primary particle dispersion is easy, in addition to which compounding a large amount of the filler is also easy. At more than 300 µm, the mechanical strength of the cured rubber product is compromised.

In this invention, the average primary particle size can be determined as the 50% cumulative weight D50 (or median diameter) by, for example, the laser diffraction method using a particle size analyzer.

The filler used in this invention is not particularly limited, provided that it is one having the above-mentioned average particle size. The filler is exemplified by inorganic fillers and organic resin fillers.

Specific examples of inorganic fillers include powders of calcium silicate, titanium dioxide, ferric oxide, diatomaceous earth, calcium carbonate, crystalline silica (quartz), aluminum hydroxide, metallic silicon, alumina, aluminum, silicon carbide, silicon nitride, magnesium oxide, magnesium carbonate, zinc oxide and aluminum nitride.

Specific examples of organic resin fillers include silicone powders such as silicone resin powders, silicone rubber powders and silicone composite powders; organic resin balloons such as hollow fillers having organic resin shells which encapsulate a volatile substance or a low-boiling substance and are formed of a polymer of a monomer selected from vinylidene chloride, acrylonitrile, methacrylonitrile, acrylates and methacrylates or of a copolymer of two or more such monomers, and hollow fillers of this type having deposited on the surface thereof an inorganic filler; and organic resin particles formed of a polymer of a monomer selected from vinylidene chloride, acrylonitrile, methacrylonitrile, acrylates and methacrylates or of a copolymer two or more such monomers.

Of these, inorganic fillers are preferred; diatomaceous earth, crystalline silica (quartz) powder and metallic silicon, silicon carbide, alumina and zinc oxide powders are more preferred; and crystalline silica (quartz) powder is even more preferred.

To enhance the thermal stability of the silicone rubber composition and the miscibility of the filler, the filler of component (B) may be surface-treated with a surface treatment agent such as a silane coupling agent or a partial hydrolyzate thereof, an alkylalkoxysilane or a partial hydrolyzate thereof, an organic silazane, a titanate coupling agent, an organopolysiloxane oil or a hydrolyzable functional group-containing organopolysiloxane, within a range that does not detract from the advantageous effects of the invention. Such treatments may be carried out by pretreating the filler itself or surface treatment may be carried out under applied heat when mixing together component (A) and component (B).

The content of the filler serving as component (B) is preferably from 1 to 500 parts by weight, more preferably from 5 to 400 parts by weight, even more preferably from 10 to 300 parts by weight, and still more preferably from 10 to 100 parts by weight, per 100 parts by weight of component (A). At less than 1 part by weight, the physical strength of the silicone rubber may decrease; at more than 500 parts by weight, the flowability of the material may be compromised. Component (B) may be of a single type used alone, or two or more types may be used together.

### [Component (C)]

In this invention, a 3-glycidyloxypropylsilanol oligomer of formula (1) below is used as component (C). This component (C) can impart thixotropic properties to the composition without worsening the hardness and compression set of the cured composition, thus making it possible to provide a liquid silicone rubber composition in which, without increasing the VOC content, separation of the filler and silicone oil does not readily occur.

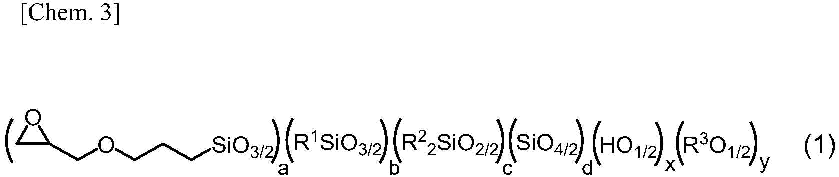

In this formula, R¹ is a monovalent hydrocarbon group of 1 to 10 carbon atoms, preferably a monovalent hydrocarbon group of 1 to 6 carbon atoms. The monovalent hydrocarbon group represented by R¹ may be linear, branched or cyclic. Specific examples include alkyl groups such as methyl, ethyl, propyl, butyl, pentyl, hexyl, heptyl, octyl and decyl groups; cycloalkyl groups such as cyclopentyl and cyclohexyl groups; alkenyl groups such as vinyl and allyl groups; and aryl groups such as phenyl and naphthyl groups. Of these, methyl, ethyl, propyl and phenyl groups are preferred; methyl and ethyl groups are more preferred; and methyl groups are even more preferred.

Each R² is independently a monovalent hydrocarbon group of 1 to 10 carbon atoms, preferably a monovalent hydrocarbon group of 1 to 6 carbon atoms, which may be substituted with a glycidyloxy group. The monovalent hydrocarbon groups represented by R² may be linear, branched or cyclic. Specific examples include the same groups as those mentioned above in connection with R¹, and glycidyloxy group-substituted alkyl groups such as glycidyloxypropyl and glycidyloxyoctyl groups. In cases where R² is a glycidyloxy group-substituted monovalent hydrocarbon group, the above-indicated number of carbon atoms does not include the number of carbon atoms on the glycidyloxy group. Of these, methyl, ethyl, propyl, glycidyloxypropyl and phenyl groups are preferred; methyl and ethyl groups are more preferred; and methyl groups are even more preferred.

R³ is a monovalent aliphatic hydrocarbon group of 1 to 10 carbon atoms, preferably 1 to 6 carbon atoms; and is more preferably a monovalent saturated or unsaturated aliphatic hydrocarbon group of 1 to 4 carbon atoms. The monovalent aliphatic hydrocarbon group represented by R³ may be linear, branched or cyclic. Specific examples include alkyl groups such as methyl, ethyl, propyl, butyl, pentyl, hexyl, heptyl, octyl and decyl groups; cycloalkyl groups such as cyclopentyl and cyclohexyl groups; and alkenyl groups such as vinyl and allyl groups. Methyl, ethyl, propyl and butyl groups are preferred; methyl and ethyl groups are more preferred; and methyl groups are even more preferred.

The subscripts 'a', 'b', 'c' and 'd' represent the molar ratios in which the respective siloxane units are present and satisfy the conditions a ≥ 0.5, b ≥ 0, c ≥ 0, d ≥ 0 and a+b+c+d = 1.

The subscript 'a' is preferably a number which satisfies 0.5 ≤ a ≤ 1. When 'a' is less than 0.5, the amount of effective epoxy groups becomes low and so the intended effects in use cannot be expected. Moreover, the resulting silanol oligomer has a high viscosity or takes the form of a gum or solid, becoming difficult to handle.

The subscript 'b' is preferably a number which satisfies 0 ≤ b ≤ 0.5, and is more preferably 0.

The subscript 'c' is preferably a number which satisfies 0 ≤ c < 0.5.

The subscript 'd' is preferably a number which satisfies 0 ≤ d ≤ 0.2, and is more preferably 0.

The subscripts 'x' and 'y' represent the number of hydroxyl groups or alkoxy groups bonded per mole of silicon atoms in the siloxane units of a to d above, and are numbers which satisfy x ≥ 1.0 and y ≤ 0.5.

The subscript 'x' is preferably a number which satisfies 1 ≤ x ≤ 2.

The subscript 'y' is preferably a number which satisfies y ≤ 0.4, and more preferably a number which satisfies y ≤ 0.3.

Component (C) is preferably a compound of formula (1a) below.

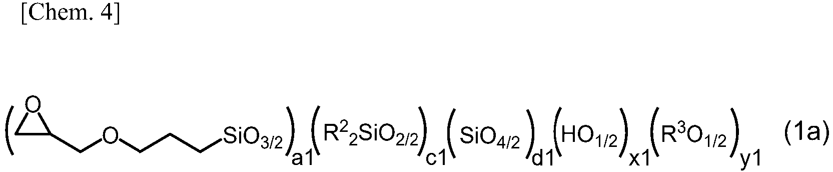

In this formula, R² and R³ are the same as above; a1, c1 and d1 are numbers which satisfy a1 ≥ 0.5, 0 ≤ c1 ≤ 0.5, 0 ≤ d1 ≤ 0.2 and a1+c1+d1 = 1; and x1 and y1 are numbers which satisfy x1 ≥ 1.0 and y1 ≤ 0.5.

Component (C) may be of one type used alone, or two or more types may be used together.

The oligomer of component (C) has a weight-average molecular weight which, from the standpoint of, for example, the viscosity of the inventive composition during handling, is preferably from 500 to 10,000, and more preferably from 500 to 1,000. In this invention, the weight-average molecular weight is a value determined by measurement via gel permeation chromatography (GPC) under the conditions indicated below relative to, as the reference substance, a polystyrene of known molecular weight. At 500 or more, the boiling point is high and so there is no risk of a decrease in the active ingredient due to evaporation during storage or of foaming or pinhole formation during heat-curing of the silicone composition, eliminating the need for a drying step or the like prior to use.

### [Measurement Conditions]

| | |
|---|---|
| Apparatus: | HLC-8320GPC, from Tosoh Corporation |
| Developing solvent: | tetrahydrofuran (THF) |
| Flow rate: | 0.6 mL/min |
| Detector: | refractive index detector (RI) |
| Columns: | TSK Guardcolumn SuperH-H |
| | TSKgel SuperHM-N (one 6.0 mm I.D. × 15 cm column) |
| | TSKgel SuperH2500 (one 6.0 mm I.D. × 15 cm column) (all from Tosoh Corporation) |
| Column temperature: | 40°C |
| Amount of sample injected: | 50 µL (as 2.0 wt% THF solution) |
| Reference: | monodisperse polystyrene |

The method for preparing component (C) used in this invention is not particularly limited. For example, production may be carried out by using a 3-glycidyloxypropyl group-containing silane compound of formula (i) below, such as 3-glycidyloxypropyltrimethoxysilane, 3- glycidyloxypropyltriethoxysilane or a mixture thereof, as the essential silane monomer starting material and optionally (co)hydrolyzing under acidic conditions silane monomer(s) that include one, two or more of any of the following: silane compounds of formula (ii) below, silane compounds of formula (iii) below and silane compounds of formula (iv) below 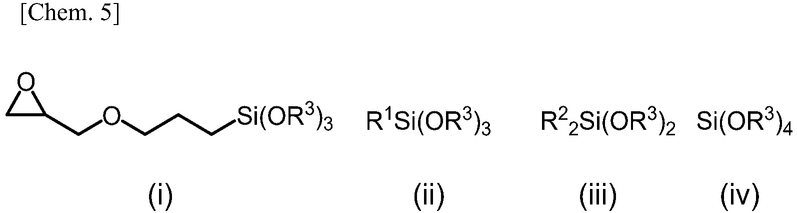 (wherein R¹ to R³ are the same as above).

Specific examples of 3-glycidyloxypropyl group-containing silane compounds of formula (i) include, in addition to 3-glycidyloxypropyltrimethoxysilane and 3-glycidyloxypropyltriethoxysilane, 3-glycidyloxypropyltripropoxysilane and 3-glycidyloxypropyltributoxysilane.

Specific examples of silane compounds represented by formula (ii) include methyltrimethoxysilane, methyltriethoxysilane, ethyltrimethoxysilane, ethyltriethoxysilane, vinyltrimethoxysilane, vinyltriethoxysilane, propyltrimethoxysilane, propyltriethoxysilane, butyltrimethoxysilane, butyltriethoxysilane, hexyltrimethoxysilane, hexyltriethoxysilane, cyclohexyltrimethoxysilane, cyclohexyltriethoxysilane, phenyltrimethoxysilane, phenyltriethoxysilane, octyltrimethoxysilane, octyltriethoxysilane, decyltrimethoxysilane and decyltriethoxysilane.

Specific examples of silane compounds represented by formula (iii) include dimethyldimethoxysilane, dimethyldiethoxysilane, diethyldimethoxysilane, diethyldiethoxysilane, methylethyldimethoxysilane, methylethyldiethoxysilane, methylpropyldimethoxysilane, methylpropyldiethoxysilane, 3-glycidyloxypropylmethyldimethoxysilane, 3-glycidyloxypropylmethyldiethoxysilane, cyclopentylmethyldimethoxysilane, cyclohexylmethyldimethoxysilane, methylphenyldimethoxysilane, methylphenyldiethoxysilane, diphenyldimethoxysilane, diphenyldiethoxysilane and methyloctyldimethoxysilane.

Specific examples of silane compounds represented by formula (iv) include tetramethoxysilane, tetraethoxysilane, tetrapropoxysilane and tetrabutoxysilane.

Hydrolytic condensation products of these may also be used. One of these compounds may be used alone, or two or more may be used together.

It is preferable to adjust the amount in which these silane monomers are used according to the molar ratios of the respective siloxane units making up the target organopolysiloxane (the values of a to d in formula (1)).

The amount of water used in the hydrolytic condensation reaction is preferably from 0.8 to 1.1 moles per mole of Si(OR³) groups (R³ being the same as described above) such as alkoxysilyl groups on the silane monomer used as the starting material.

The acid constituent used to adjust conditions at the time of the hydrolysis reaction to acidic conditions is not particularly limited, so long as it is a Brønsted acid available on the market. However, in terms of the ease of acquisition, formic acid, acetic acid, citric acid, hydrochloric acid and nitric acid are preferred. In order to hold down increases in the molecular weight of the organopolysiloxane obtained by excessive dehydrative condensation between silanols and suppress declines in water solubility due to a decrease in the amount of silanol groups, the amount of acid used is preferably from 0.0001 to 0.01 mole per mole of silane monomer.

In the hydrolysis reaction, an organic solvent may be optionally used within a range that does not inhibit the reaction. The organic solvent used is preferably one which is compatible with the water serving as a reaction starting material, with alcohols, esters, ketones, ethers and the like being preferred. Also, taking into consideration the distillation conditions when removing alcohol that forms, it is preferable for the boiling point of the organic solvent to be lower; a solvent having a boiling point under atmospheric pressure of 150°C or below is desirable.

Specific examples of alcohols include methanol, ethanol, propanol, isopropanol, butanol, isobutanol, pentyl alcohol, neopentyl alcohol, hexyl alcohol and cyclohexyl alcohol.

Specific examples of esters include ethyl acetate and butyl acetate.

Specific examples of ketones include acetone, methyl ethyl ketone and cyclohexanone.

Specific examples of ethers include tetrahydrofuran, tetrahydropyran and dioxane.

The reaction conditions preferably involve mixing the above silane monomer and water and stirring the mixture over a period of 1 to 5 hours at between 55°C and 70°C so as to cause hydrolytic condensation of the silane monomers to proceed, and then distilling off a water/alcohol mixture under reduced pressure and in a temperature range of between 30°C and 80°C.

The 3-glycidyloxypropylsilanol oligomer used in this invention preferably has water and free alcohol contents that are each not more than 1 wt%. In this way, the oligomer can be made a volatile organic compound (VOC)-free substance, which is advantageous for reducing the level of VOCs in the overall silicone composition to which it is added. In this invention, "VOC-free" means that the free alcohol content in the above oligomer or in the inventive composition is preferably not more than 1 wt%. "Alcohol" refers here in particular to methanol or ethanol. Although water is not a VOC, when present in excess, it may react with epoxy groups, and so it is desirable for as little to be included as possible. At a water content of not more than 1 wt%, a decrease in the active ingredient due to evaporation during storage and the formation of alcohols due to hydrolysis by moisture in the silicone composition or moisture in air are minimized and there is no risk of foaming or pinhole formation when the silicone composition is heat cured, making a drying step or the like prior to use unnecessary.

The amount of component (C) added per 100 parts by weight of component (A) is preferably from 0.01 to 10 parts by weight, more preferably from 0.1 to 2.0 parts by weight, and even more preferably from 0.5 to 1.7 parts by weight. When the amount of component (C) added is below 0.01 part by weight, it may not be possible to impart the target thixotropic properties. At more than 10 parts by weight, the tensile strength and other mechanical properties of the cured silicone rubber may decrease.

### [Component (D)]

Component (D) is a curing agent. The curing agent is not particularly limited, provided that it is able to cure above component (A). Generally, a known curing agent may be used here as the rubber curing agent. Examples include components (D1) and (D2) below.
(D1) Addition reaction (hydrosilylation reaction) type curing agents; i.e., hydrosilylation reaction curing agents made up of a combination of an organohydrogenpolysiloxane (crosslinking agent) and a hydrosilylation catalyst.
(D2) Organic peroxides.

Each of these is described in detail below.

### [(D1) Addition Reaction-Type Curing Agent]

### (D11) Organohydrogenpolysiloxane

The organohydrogenpolysiloxane, which serves as the crosslinking agent in the addition reaction-type curing agent (D1), preferably has two or more hydrosilyl groups per molecule. An organohydrogenpolysiloxane of formula (2) below is especially preferred.
[Chem. 6]

(R⁴₃SiO_{1/2})ₑ(R⁴₂SiO_{2/2})_{f}(R⁴SiO_{3/2})_{g}(SiO_{4/2})ₕ (2)

Here, each R⁴ is independently a group selected from hydrogen atoms; alkyl groups of 1 to 8, preferably 1 to 6, carbon atoms; cycloalkyl groups of 6 to 10, preferably 6 to 8, carbon atoms; aryl groups of 6 to 10, preferably 6 to 8, carbon atoms; and aralkyl groups of 7 to 10, preferably 7 to 9, carbon atoms. Here, at least 2, preferably from 2 to 200, and more preferably from 2 to 130, R⁴ groups on the molecule are hydrogen atoms.

The alkyl groups represented by R⁴ may be linear or branched. Specific examples include methyl, ethyl, propyl, isopropyl, butyl, isobutyl, tert-butyl, pentyl and hexyl groups.

Specific examples of cycloalkyl groups include cyclopentyl and cyclohexyl groups.

Specific examples of aryl groups include phenyl and tolyl groups.

Specific examples of aralkyl groups include benzyl and 2-phenylpropyl groups.

In addition, fluoroalkyl groups or the like in which some or all hydrogen atoms on the above groups are substituted with halogen atoms such as fluorine atoms may be used.

The subscript 'e' is an integer which satisfies 2 ≤ e ≤ 30, and preferably 2 ≤ e ≤ 20.

The subscript 'f' is an integer which satisfies 0 ≤ f ≤ 300, and preferably 3 ≤ f ≤ 200.

The subscript 'g' is an integer which satisfies 0 ≤ g ≤ 10, and preferably 0 ≤ g ≤ 5.

The subscript 'h' is an integer which satisfies 0 ≤ h ≤ 30, and preferably 0 ≤ h ≤ 20.

The molecular structure of the organohydrogenpolysiloxane may be linear, cyclic, branched or three-dimensionally network-like. Here, the number of silicon atoms on the molecule (or the degree of polymerization) is preferably from 2 to 300, and more preferably from 4 to 200. One that is liquid at 25°C can be preferably used. The hydrosilyl groups may be positioned at the ends of the molecular chain or on side chains (partway along the molecular chain), or may be positioned at both. The method for measuring the degree of polymerization is the same as that described in connection with component (C).

A single organohydrogenpolysiloxane may be used alone, or two or more may be used together.

Specific examples of such organohydrogenpolysiloxanes include 1,1,3,3-tetramethyldisiloxane, 1,3,5,7-tetramethylcyclotetrasiloxane, tris(dimethylhydrogensiloxy)methylsilane, tris(dimethylhydrogensiloxy)phenylsilane, methylhydrogenpolysiloxanes capped at both ends with trimethylsiloxy groups, dimethylsiloxane-methylhydrogensiloxane copolymers capped at both ends with trimethylsiloxy groups, dimethylpolysiloxanes capped at both ends with dimethylhydrogensiloxy groups, dimethylsiloxane-methylhydrogensiloxane copolymers capped at both ends with dimethylhydrogensiloxy groups, methylhydrogensiloxane-diphenylsiloxane copolymers capped at both ends with trimethylsiloxy groups, methylhydrogensiloxane-diphenylsiloxane-dimethylsiloxane copolymers capped at both ends with trimethylsiloxy groups, cyclic methylhydrogenpolysiloxanes, cyclic methylhydrogensiloxane-dimethylsiloxane copolymers, cyclic methylhydrogensiloxane-diphenylsiloxane-dimethylsiloxane copolymers, copolymers of (CH₃)₂HSiO_{1/2} units and SiO_{4/2} units, copolymers of (CH₃)₂HSiO_{1/2} units and SiO_{4/2} units and (C₆H₅)SiO_{3/2} units and, in each of the foregoing example compounds, those compounds in which some or all of the methyl groups are substituted with other alkyl groups such as ethyl and propyl groups or aryl groups such as phenyl groups.

Specific examples of such organohydrogenpolysiloxanes include compounds having the following structural formulas.

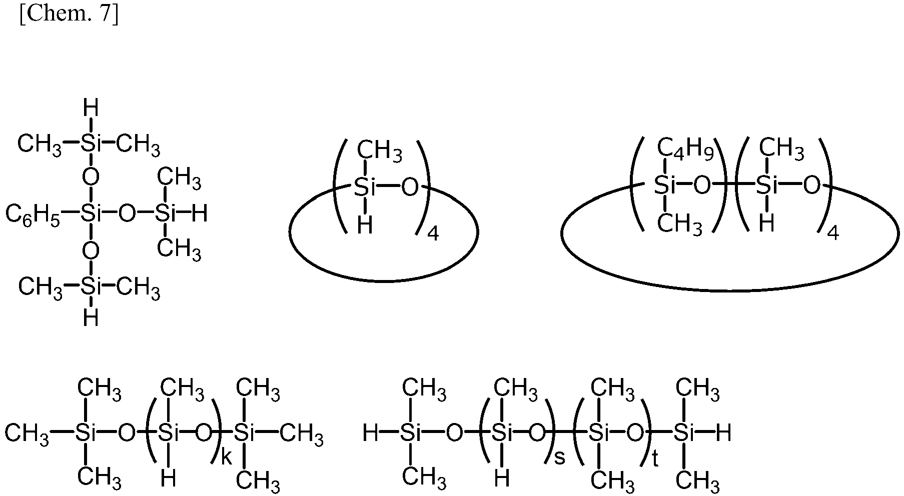

In these formulas, k is an integer from 2 to 10, and s and t are each independently integers from 0 to 60, preferably from 0 to 20, and more preferably from 0 to 10.

These organohydrogenpolysiloxanes have a viscosity at 25°C of preferably from 0.5 to 10,000 mPa·s, and more preferably from 1 to 300 mPa·s.

It is desirable to include this organohydrogenpolysiloxane in an amount such that the molar ratio of silicon-bonded hydrogen atoms (hydrosilyl groups) in the organohydrogenpolysiloxane to silicon-bonded alkenyl groups in component (A), expressed as "hydrosilyl groups/alkenyl groups," becomes preferably from 0.5 to 10, more preferably from 0.6 to 6, and even more preferably from 0.7 to 5. At less than 0.5, crosslinking is inadequate and sufficient mechanical strength may not be attainable. On the other hand, at more than 10, the physical properties after curing may decrease and, in particular, the heat resistance and compression set may markedly deteriorate.

### (D12) Hydrosilylation Catalyst

Hydrosilylation catalysts that can be used in the above addition reaction curing agent (D1) are catalysts which promote addition reactions between alkenyl groups in component (A) and hydrosilyl groups in the above organohydrogenpolysiloxane serving as a crosslinking agent.

Examples of hydrosilylation catalysts include ruthenium, platinum and other platinum metal catalysts. Platinum metal catalysts include unalloyed metals of the platinum group and compounds thereof. Catalysts that are known as catalysts for addition-curable silicone rubber compositions may be used for this purpose. Specific examples include platinum black, finely divided platinum metal adsorbed onto a support such as silica, alumina or silica gel, platinic chloride, chloroplatinic acid, reaction products of chloroplatinic acid and monohydric alcohols, complexes with chloroplatinic acid and olefins, complexes of chloroplatinic acid and vinyl group-containing (poly)siloxanes, complexes of chloroplatinic acid and phosphites, and complexes of these with vinyl group-containing (poly)siloxanes; palladium catalysts; rhodium catalysts; and ruthenium catalysts. Of these, platinum and platinum compounds are especially preferred.

The hydrosilylation catalyst should be added in a catalytic amount; that is, in an amount which is able to promote the addition reaction. Typically, this amount, expressed in terms of the weight of the platinum metal, is preferably from 1 ppm to 1 wt%, and more preferably from 10 to 500 ppm, of the weight of component (A). When the amount of addition is less than 1 ppm, the addition reaction may not fully proceed and curing may be inadequate. On the other hand, at more than 1 wt%, further addition has little effect on the reactivity and may be uneconomical.

In addition to the above catalyst, an addition crosslinking regulator may be used for the purpose of adjusting the cure rate. Specific examples include ethynylcyclohexanol and tetramethyltetravinylcyclotetrasiloxane.

### [(D2) Organic Peroxide]

Examples of the organic peroxide (D2) include benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butylperoxide, t-butyl perbenzoate and 1,6-hexanediol bis(t-butylperoxycarbonate).

The organic peroxide is added in an effective curing amount, this being preferably from 0.1 to 15 parts by weight, and more preferably from 0.2 to 10 parts by weight, per 100 parts by weight of component (A). If the amount of addition is adequate, the crosslinking reaction fully proceeds and worsening of the physical properties, such as a decrease in hardness, insufficient rubber strength and increased compression set, does not arise. Also, when the amount of addition does not exceed the above range, this is economically desirable, the level of decomposition products of the curing agent is sufficiently low, there is no worsening of the physical properties such as increased compression set, and discoloration of the resulting sheet does not increase.

Both (D1) and (D2) may be used as the curing agent, although it is preferable in this invention to use the addition reaction curing agent of component (D1).

### [Other Ingredients]

Other ingredients may be added to the silicone rubber composition of the invention within ranges that do not detract from the advantageous effects of the invention. For example, inorganic fillers other than above component (B) may be optionally added to the silicone rubber composition of the invention. It is possible to add a reinforcing silica fine powder.

In order to obtain a silicone rubber composition of excellent mechanical strength, the reinforcing silica fine powder has a specific surface area, as measured by the BET adsorption method, of preferably at least 10 m²/g, more preferably from 50 to 400 m²/g, and even more preferably from 50 to 200 m²/g. Examples of reinforcing silica fine powders include fumed silica (dry silica) and precipitated silica (wet silica). Of these, fumed silica (dry silica) is preferred.

These reinforcing silica fine powders that may be used are exemplified by such commercial products as Aerosil (registered trademark) 130, 150, 200 and 300 from Nippon Aerosil Co.; Reolosil (registered trademark) QS-102 and QS-30 from Tokuyama Corporation; CAB-O-SIL (registered trademark) H-300 from Cabot Corporation; and Nipsil (registered trademark) LP from Tosoh Silica Corporation. The surfaces of these may be hydrophobized with a treatment agent such as an organopolysiloxane, organopolysilazane, chlorosilane or alkoxysilane. These silica fine powders may be of one type used alone, or two or more types may be used together. Regarding the above hydrophobizing treatment, the reinforcing silica fine powder may be compounded while being treated with the above hydrophobizing treatment agent or a commercially available hydrophobized reinforcing silica fine powder may be used.

To make the compression set even better and further suppress separation and precipitation of the filler, it is desirable for the amount in which the above reinforcing silica fine powder is added to the silicone rubber composition to be on the small side.

In order to include the above reinforcing silica fine powder while better suppressing separation and precipitation of the filler and obtaining a better compression set, it is preferable for the amount of the reinforcing silica fine powder to be from 0 to 10 parts by weight per 100 parts by weight of the organopolysiloxane serving as component (A) in the silicone rubber composition. When including a reinforcing silica fine powder, the lower limit in the amount added may be set to 0.1 part by weight or more, more preferably from 0.5 to 5 parts by weight, and even more preferably from 1 to 3 parts by weight.

Including the reinforcing silica fine powder is preferable because, compared with the use of component (C) alone, the thixotropy is further enhanced by synergistic effects. Moreover, when used together with component (C), although a worsening of the compression set due to an increase in the amount of reinforcing silica fine powder may be difficult to avoid, improvement can be achieved with regard to the unwanted decrease, due to re-stirring, in the viscosity of the composition to a level lower than the initial viscosity. This is desirable because the viscosity no longer becomes lower with re-stirring than the initial viscosity.

Where necessary, hydrosilylation reaction regulators such as nitrogen-containing compounds and acetylene compounds, phosphorus compounds, nitrile compounds, carboxylates, tin compounds, mercury compounds and sulfur compounds, various types of additives, iron oxide, flame retardants such as halogen compounds, heat stabilizers and the like may be optionally included in the liquid silicone rubber composition of the invention.

### (2) Preparation and Molding of Liquid Silicone Rubber Compositions.

The method of producing the liquid silicone rubber composition of the invention is not particularly limited. The composition can be prepared by using, for example, a conventional mixing stirrer or intensive mixer such as a kneader or a planetary mixer to uniformly mix above components (A) to (D) and, if necessary, other ingredients (reinforcing silica fine powder and various other types of additives). The composition also is not particularly limited as to its form, and may be in the form of a one-part composition or a two-part composition.

A one-part composition can be obtained by, for example, placing components (A) to (D) and, if necessary, other ingredients (reinforcing silica fine powder and various other types of additives) in a planetary mixer (available under the trade name Planetary Mixer, from Inoue Mfg., Inc.), and mixing the ingredients together for a period of from 10 minutes to 1 hour at between 20°C and 50°C.

A two-part composition may be formulated in any combination so long as components (A) and (D) are not present together. For example, when (D1) an addition reaction-type curing agent is used as the curing agent, components (A), (B) and (C) are placed in a planetary mixer and mixed together at a given temperature and for a given length of time. A hydrosilylation catalyst (D12) is then added and mixed in, and the resulting composition is designated as "Part A." Next, components (A), (B) and (C) are placed in a planetary mixer and mixed together at a given temperature and for a given length of time. A reaction regulator is then added and mixed in, following which an organohydrogenpolysiloxane (D11) is also added and mixed in and the resulting composition is designated as "Part B." In this way, a two-part composition of Part A and Part B can be obtained.

Methods for shaping or molding the silicone rubber composition of the invention include casting, injection molding and coating. As for the curing conditions, by way of illustration, press-curing at a temperature of between 100°C and 300°C for a period of from 10 seconds to one hour may be suitably employed. Following shaping or molding, a post-cure (secondary cure) within a 120 to 250°C oven lasting for a period of from about 30 minutes to about 70 hours may be additionally carried out for such purposes as to lower the amount of low-molecular-weight siloxane ingredients.

### EXAMPLES

The invention is illustrated more fully below by way of Synthesis Examples, Examples according to the invention and Comparative Examples, although the invention is not limited by these Examples. In the following Examples, unless noted otherwise, "parts" means "parts by weight." The apparatuses and measurement methods used in the Examples are as follows.

### (1) GPC Measurement Conditions (measurement of weight-average molecular weight)

| | |
|---|---|
| Apparatus: | HLC-8320GPC, from Tosoh Corporation |
| Developing solvent: | tetrahydrofuran (THF) |
| Flow rate: | 0.6 mL/min |
| Detector: | refractive index detector (RI) |
| Columns: | TSK Guardcolumn SuperH-H |
| | TSKgel SuperHM-N (one 6.0 mm I.D. × 15 cm column) |
| | TSKgel SuperH2500 (one 6.0 mm I.D. × 15 cm column) (all from Tosoh Corporation) |
| Column temperature: | 40°C |
| Amount of sample injected: | 50 µL (as 2.0 wt% THF solution) |
| Reference: | monodisperse polystyrene |

### (2) Proton Nuclear Magnetic Resonance Spectrum (¹H-NMR spectrum) Measurement Conditions

| | |
|---|---|
| Apparatus: | AVANCE III400, from BRUKER |
| Solvent: | CDCl₃ (heavy chloroform) |
| Internal reference: | tetramethylsilane (TMS) |

### (3) Viscosity

Measured at 25°C with a rotational viscometer by the method described in JIS K7117-1: 1999.

### (4) Kinematic Viscosity

Measured with a Cannon-Fenske viscometer by the method described in JIS Z8803: 2011.

### (5) Measurement of Physical Properties of Silicone Rubber Compositions

The liquid silicone rubber compositions obtained in subsequently described Examples 1 to 7 and Comparative Examples 1 to 7 were stored at 23°C for 7 days following preparation, after which their viscosities at 25°C and shear rates of 0.9 s⁻¹ and 10 s⁻¹ were measured with a shear viscometer (HAAKE MARS40 Rheometer, from Thermo Fisher Scientific). The results are presented in Table 1.

### (6) Measurement of Physical Properties of Cured Silicone Rubber

Immediately following preparation, the liquid silicone rubber compositions obtained in subsequently described Examples 1 to 7 and Comparative Examples 1 to 7 were press-cured at 120°C for 10 minutes to form silicone rubber sheets, after which a 4-hour post-cure was carried out at 200°C, thereby fabricating 2 mm thick sheets, 6 mm thick sheets and 12.5 mm thick, 29 mm diameter cylindrical rubber moldings for testing. The density and compression set (180°C, 22 hours, 25% compression) of the fabricated test sheets and moldings were measured based on JIS K6249:2003. In addition, the Asker C hardness according to JIS S 6050:2008 was measured. The results are presented in Table 1.

### [1] Synthesis of Water-Soluble 3-Glycidyloxypropylsilanol Oligomers

### [Synthesis Example 1] Synthesis of Component (C-1)

A one-liter three-neck flask equipped with a stirrer, a refluxing condenser, a dropping funnel and a thermometer was charged with 472 g (2.0 moles) of 3-glycidyloxypropyltrimethoxysilane. To this was added dropwise 108 g of a 0.2 wt% hydrochloric acid solution (6.0 moles in terms of the amount of water). During dropwise addition, temperature control was carried out by suitable cooling so that the internal temperature falls within a range of 20°C to 40°C. Following dropwise addition, hydrolysis proceeded via the reaction and the temperature of the reaction mixture rose, but temperature control was carried out by air cooling or water cooling so as to have the reaction proceed at an internal temperature within a range of 20°C to 40°C. Following the completion of dropwise addition, the flask contents were heated and stirred at 70°C for 1 hour, causing hydrolytic condensation reactions on the methoxysilyl groups to proceed. The alcohol that formed in the hydrolysis reaction and excess water were then removed by vacuum distillation at 70°C, yielding a clear colorless liquid (3-glycidyloxypropylsilanol oligomer).

This liquid was freely compatible with and soluble in water and had a dynamic viscosity at 25°C of 726 mm²/s, the functional group content of epoxy groups contained on the oligomer was 189 g/mol, and the weight-average molecular weight was 830. As a result of analysis by ¹H-NMR, GPC, etc., the above oligomer was found to have the average compositional structure shown in formula (3) below. The ¹H-NMR spectrum is shown in FIG. 1.

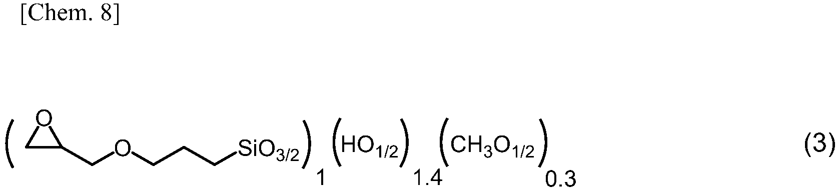

### [Synthesis Example 2] Synthesis of Component (C-2)

Aside from changing the amount of 3-glycidyloxypropyltrimethoxysilane to 425 g (1.8 mol), the amount of dimethyldimethoxysilane to 24 g (0.2 mol) and the amount of 0.2 wt% hydrochloric acid to 104.4 g (5.8 moles in terms of the amount of water), the target 3-glycidyloxypropyl group-containing silanol oligomer was obtained in the same way as in Synthesis Example 1.

The dynamic viscosity of the resulting oligomer at 25°C was 429 mm²/s, the functional group content of epoxy groups contained on the oligomer was 202 g/mol, and the weight-average molecular weight was 610. As a result of analysis by ¹H-NMR and GPC measurement, this oligomer had the structure shown in formula (4) below.

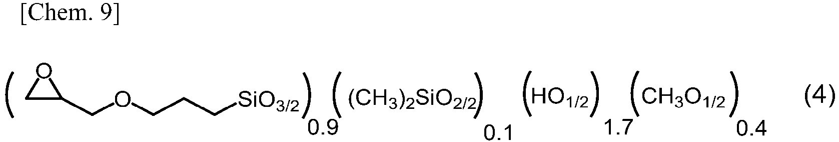

### [Synthesis Example 3] Synthesis of Component (C-3)

Aside from changing the amount of 3-glycidyloxypropyltrimethoxysilane to 236 g (1.0 mol), the amount of dimethyldimethoxysilane to 120 g (1.0 mol) and the amount of 0.2 wt% hydrochloric acid to 90 g (5.0 moles in terms of the amount of water), the target 3-glycidyloxypropyl group-containing silanol oligomer was obtained in the same way as in Synthesis Example 1.

The dynamic viscosity of the resulting oligomer at 25°C was 218 mm²/s, the functional group content of epoxy groups contained on the oligomer was 258 g/mol, and the weight-average molecular weight was 700. As a result of analysis by ¹H-NMR and GPC measurement, this oligomer had the structure shown in formula (5) below.

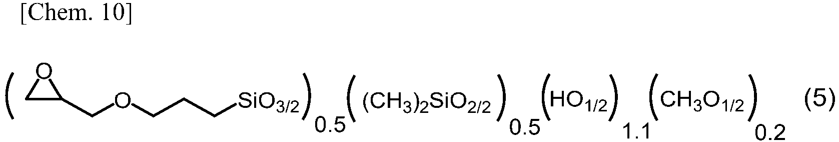

### [Synthesis Example 4] Synthesis of Component (C-4)

Aside from changing the amount of 3-glycidyloxypropyltrimethoxysilane to 425 g (1.8 mol), the amount of 3-glycidyloxypropylmethyldimethoxysilane to 44 g (0.2 mol) and the amount of 0.2 wt% hydrochloric acid to 104.4 g (5.8 moles in terms of the amount of water), the target 3-glycidyloxypropyl group-containing silanol oligomer was obtained in the same way as in Synthesis Example 1.

The dynamic viscosity of the resulting oligomer at 25°C was 361 mm²/s, the functional group content of epoxy groups contained on the oligomer was 200 g/mol, and the weight-average molecular weight was 510. As a result of analysis by ¹H-NMR and GPC measurement, this oligomer had the structure shown in formula (6) below.

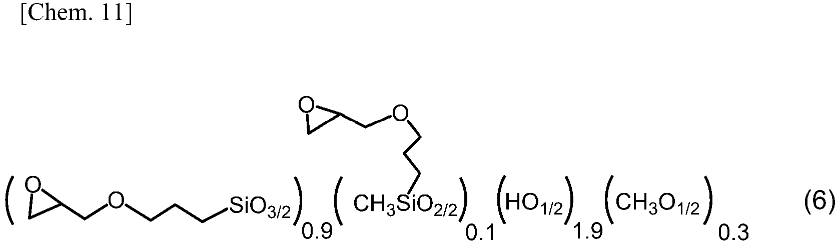

### [2] Preparation of Silicone Rubber Compositions, and Production and Evaluation of Cured Products (1)

### [Example 1]

A composition was prepared by compounding, in the following order: 100 parts of a dimethylsiloxane-methylvinylsiloxane copolymer (A) which is capped at both ends of the molecular chain with trimethylsiloxy groups, has an alkenyl group content of 1.0×10⁻² mol/100 g, contains five vinyl groups on side chains and has a viscosity of 20,000 mPa·s, 0.07 part of 1-ethynylcyclohexanol, 0.13 part of a dimethylpolysiloxane solution (D12) containing 1 wt% (in terms of the platinum atom content) of a chloroplatinic acid/1,3-divinyltetramethyldisiloxane complex, 1.4 parts of hydrophobized fumed silica (R-972, from Nippon Aerosil Co.) having a BET specific surface area of 110 m²/g, 50 parts of a filler (B) (pulverized crystalline silica powder; average primary particle size, 4 µm), 0.78 part of 3-glycidyloxypropylsilanol oligomer (C-1), 1.84 parts of the dimethylsiloxane-methylhydrogensiloxane copolymer capped at both ends with dimethylhydrogensiloxy groups of formula (7) below (D11) having a viscosity of 11 mPa·s (silicon-bonded hydrogen atom content = 3.2×10⁻¹ mol/100 g), and 3 parts of a dimethylpolysiloxane solution containing 50 wt% of iron oxide; and mixing these ingredients together in a planetary mixer at room temperature (25°C) for 30 minutes. The prepared composition was then press-cured at 120°C for 10 minutes to form silicone rubber sheets and 4 hours of post-curing at 200°C was carried out, thereby giving rubber sheets and rubber moldings. The rubber properties shown in Table 1 were evaluated using the resulting rubber sheets and rubber moldings. The results are presented in Table 1. 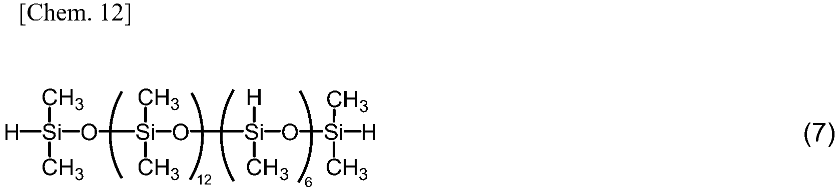 In this formula, the respective siloxane units may be bonded as blocks or randomly.

### [Examples 2 to 7, Comparative Examples 1 to 7]

Silicone rubber compositions were prepared by carrying out compounding in Examples 2 to 7 and Comparative Examples 1 to 7 in accordance with Table 1, rubber sheets and rubber moldings were fabricated in the same way as in Example 1, and the various rubber properties were evaluated. The results are presented in Table 1.

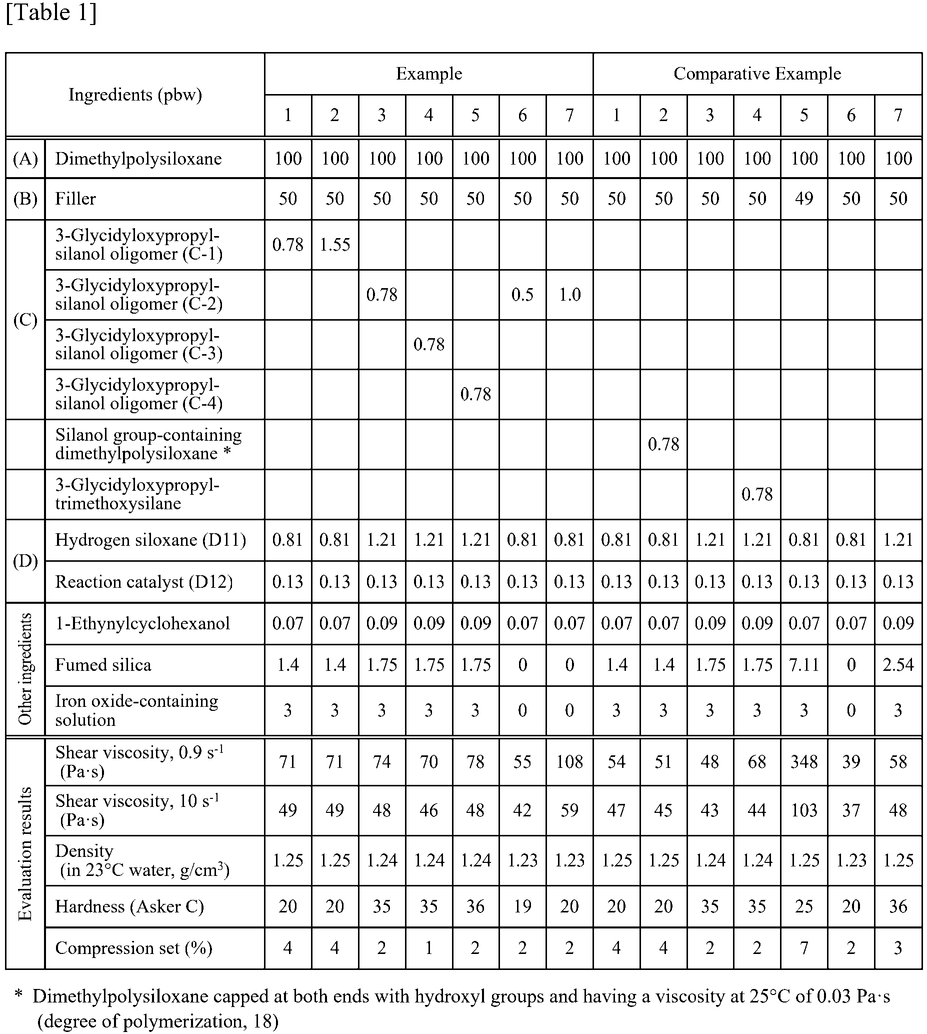

### [3] Preparation of Silicone Rubber Compositions, and Production and Evaluation of Cured Products (2)

### [Example 4a, Comparative Examples 3a and 4a]

### (7) Evaluation 1 of Shelf Stability of Silicone Rubber Compositions

Using the same ingredients as in, respectively, Example 4 and Comparative Examples 3 and 4, the composition was divided into two liquid parts so that the reaction regulator and hydrogen polysiloxane making up the platinum catalyst are separately present, and each part was sealed and stored at 70°C for 7 days. The two parts were mixed together, either initially upon preparation of the composition (that is, immediately after preparation and without storage) or after storage, and the resulting mixture was then rendered into silicone rubber sheets by press-curing at 120°C for 10 minutes. After this, a 4-hour post-cure at 200°C was carried out, thereby fabricating 6 mm thick sheets and 12.5 mm thick, 29-mm diameter cylindrical rubber moldings for testing. The compression set (180°C, 22 hours, 25% compression) of the fabricated test sheets and moldings was measured based on JIS K 6249: 2003. In addition, the Asker C hardness was measured in accordance with JIS S 6050: 2008. The results are presented in Table 2.

### [4] Preparation of Silicone Rubber Compositions, and Production and Evaluation of Cured Products (3)

### [Example 4b, Comparative Examples 5b and 7b]

### (8) Evaluation 2 of Shelf Stability of Silicone Rubber Compositions

Using the same ingredients as in, respectively, Example 4 and Comparative Examples 5 and 7, the composition was divided into two liquid parts so as to keep the reaction regulator and the hydrogen polysiloxane making up the platinum catalyst separate, and each part was sealed and stored at 23°C for 14 days. Next, the two liquid parts, without being mixed together, were subjected to viscosity measurements at 25°C and shear rates of 0.9 s⁻¹ and 10 s⁻¹ using a shear viscometer (HAAKE MARS 40 Rheometer, from Thermo Fisher Scientific). These measurement results were designated as the "initial" viscosity. The two liquid compositions that had been stored at 23°C for 14 days were then separately mixed for 10 minutes in a planetary mixer, and each was sealed and stored at 23°C for 14 minutes. The two liquid parts, without being mixed together, were then each subjected to viscosity measurements at 25°C and shear rates of 0.9 s⁻¹ and 10 s⁻¹ using a shear viscometer (HAAKE MARS 40 Rheometer (from Thermo Fisher Scientific). These measurement results were designated as the viscosity "after re-stirring." The results are presented in Table 3.

The compositions used in Evaluation 2 were prepared as described below in the usual manner.

In Example 4b, using the same ingredients as in Example 4, the composition obtained by mixing together 100 parts of component (A), 50 parts of component (B), 0.77 part of component (C), 1.4 parts of fumed silica, 0.25 part of hydrosilylation catalyst (D12) and 3 parts of an iron oxide solution was designated as "Part A," and the composition obtained by mixing together 100 parts of component (A), 50 parts of component (B), 0.80 part of component (C), 2.1 parts of fumed silica, 0.18 part of 1-ethynylcyclohexanol, 3 parts of iron oxide solution and 2.42 parts of organohydrogenpolysiloxane (D11) was designated as "Part B."

In Comparative Example 5b, using the same ingredients as in Comparative Example 5, the composition obtained by mixing together 100 parts of component (A), 48 parts of component (B), 7 parts of fumed silica, 0.25 part of (D12) hydrosilylation catalyst and 3 parts of an iron oxide solution was designated as "Part A," and the composition obtained by mixing together 97 parts of component (A), 48 parts of component (B), 7 parts of fumed silica, 0.14 part of 1-ethynylcyclohexanol, 3 parts of iron oxide solution and 1.62 parts of organohydrogenpolysiloxane (D11) was designated as "Part B."

In Comparative Example 7b, using the same ingredients as in Comparative Example 7, the composition obtained by mixing together 100 parts of component (A), 50 parts of component (B), 2.18 parts of fumed silica, 0.25 part of hydrosilylation catalyst (D12) and 3 parts of an iron oxide solution was designated as "Part A," and the composition obtained by mixing together 100 parts of component (A), 50 parts of component (B), 2.9 parts of fumed silica, 0.18 part of 1-ethynylcyclohexanol, 3 parts of iron oxide solution and 2.42 parts of organohydrogenpolysiloxane (D11) was designated as "Part B."

**[Table 2]**

| | Temperature | | 70°C |
|---|---|---|---|
| | Number of days | Initially upon preparation (immediately after preparation, without storage) | After 7 days of storage |
| Example 4a | Hardness (Type-A) | 35 | 35 |
| | Compression set (%) | 1 | 2 |
| Comparative Example 3a | Hardness (Type-A) | 35 | 34 |
| | Compression set (%) | 2 | 2 |
| Comparative Example 4a | Hardness (Type-A) | 35 | 33 |
| | Compression set (%) | 2 | 4 |

**[Table 3]**

| | | Initial (23°C, 14-day storage × 1) | | After re-stirring (23°C, 14-day storage × 2) | | Percent change | |
|---|---|---|---|---|---|---|---|
| | | A | B | A | B | A | B |
| Example 4b | Shear viscosity, 0.9 s⁻¹ (Pa·s) | 70 | 69 | 65 | 64 | -7% | -7% |
| | Shear viscosity, 10 s⁻¹ (Pa·s) | 48 | 43 | 47 | 42 | -2% | -2% |
| Comparative Example 5b | Shear viscosity, 0.9 s⁻¹ (Pa·s) | 329 | 339 | 153 | 145 | -53% | -57% |
| | Shear viscosity, 10 s⁻¹ (Pa·s) | 103 | 97 | 85 | 77 | -17% | -21% |
| Comparative Example 7b | Shear viscosity, 0.9 s⁻¹ (Pa·s) | 61 | 54 | 50 | 47 | -18% | -13% |
| | Shear viscosity, 10 s⁻¹ (Pa·s) | 51 | 44 | 46 | 42 | -10% | -5% |

### [Evaluation Results]

As shown in Table 1, the liquid silicone rubber compositions obtained in Examples 1 to 7 satisfy the requirements of the invention. From the physical properties of the liquid silicone rubber compositions in Examples 1 to 7 containing a 3-glycidyloxypropylsilanol oligomer as component (C) and the test sheets and moldings obtained therefrom, it is apparent that, compared with Comparative Examples 1 to 7, the thixotropic properties can be freely controlled without adversely affecting the rise in hardness and the compression set and without the risk of increasing VOC emissions.

By contrast, Comparative Example 4 is a composition in which 3-glycidyloxypropyltrimethoxysilane, the starting material for the 3-glycidyloxypropylsilanol oligomer serving as component (C-1), has been added. Although the viscosity of this composition is improved over that in Comparative Example 3, as shown in Table 2, the compression set has worsened after the shelf stability test (7 days at 70°C), in addition to which it is highly likely that methanol will form over time, and so there is a risk that VOC emissions will end up rising.

Comparative Example 5 is a composition in which the amount of reinforcing silica fine powder has been increased relative to that in Comparative Example 1, and Comparative Example 7 is a composition in which the amount of reinforcing silica fine powder has been increased relative to that in Comparative Example 3. As shown in Table 3, the initial viscosities are high, but upon re-stirring the viscosity ends up becoming lower than the initial viscosity. When stress is applied to the composition due to the storage conditions and transporting conditions, the viscosity may end up becoming lower than the target viscosity. Moreover, as shown in Table 1, compared with Example 1 and Comparative Example 1, the hardness of the cured products rose and, in Comparative Example 5, the compression set worsened.

The above results demonstrate that, in the liquid silicone rubber compositions of Examples 1 to 7 in which a 3-glycidyloxypropylsilanol oligomer has been added, the thixotropic properties can be freely controlled without adversely affecting, for example, the rise in hardness and the compression set, and without the risk of increasing VOC emissions.

## Claims

1. A liquid silicone rubber composition comprising:
(A) a liquid organopolysiloxane having two or more silicon-bonded alkenyl groups per molecule,
(B) a filler having an average particle size of 0.1 to 300 µm,
(C) a 3-glycidyloxypropylsilanol oligomer of formula (1) below 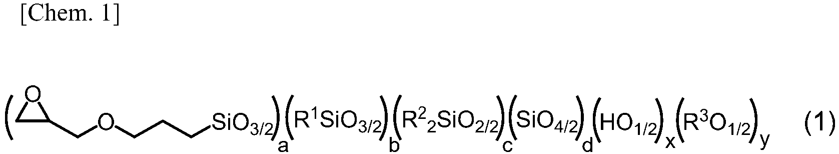 (wherein R¹ is a monovalent hydrocarbon group of 1 to 10 carbon atoms, each R² is independently a monovalent hydrocarbon group of 1 to 10 carbon atoms which may be substituted with a glycidyloxy group, R³ is a monovalent aliphatic hydrocarbon group of 1 to 10 carbon atoms, a, b, c and d are numbers which satisfy the conditions a ≥ 0.5, b ≥ 0, c ≥ 0, d ≥ 0 and a+b+c+d = 1, and x and y are numbers which satisfy the conditions x ≥ 1.0 and y ≤ 0.5), and
(D) an effective curing amount of a curing agent.

2. The liquid silicone rubber composition of claim 1, wherein the filler serving as component (B) is an inorganic filler.

3. The liquid silicone rubber composition of claim 1 or 2, wherein component (C) has a weight-average molecular weight of from 500 to 10,000.

4. The liquid silicone rubber composition of any one of claims 1 to 3, wherein b, c and d in formula (1) are numbers which satisfy the conditions b = 0, 0 ≤ c ≤ 0.5 and 0 ≤ d ≤ 0.2.
